# EUROPÄISCHE PATENTSCHRIFT

(11) **EP 2 637 859 B1**
(45) Veröffentlichungstag und Bekanntmachung des Hinweises auf die Patenterteilung: **25.10.2017**
(21) Anmeldenummer: 11782112.4
(22) Anmeldetag: 07.11.2011
(51) Int. Cl.: B32B 3/12, B60R 21/00, B62D 25/00

(54) **WABENKERN, HERSTELLUNGSVERFAHREN FÜR EINEN WABENKERN SOWIE VERBUNDPLATTE MIT EINEM WABENKERN**
HONEYCOMB CORE, METHOD OF PRODUCING A HONEYCOMB CORE AND SANDWICH PANEL COMPRISING A HONEYCOMB CORE
ÂME ALVÉOLAIRE, PROCÉDÉ DE FABRICATION D'ÂME ALVÉOLAIRE AINSI QUE PANNEAU COMPOSITE COMPRENANT UNE ÂME ALVÉOLAIRE

(30) Priorität: 09.11.2010 US 411615 P
(43) Veröffentlichungstag der Anmeldung: 18.09.2013
(73) Patentinhaber: Magna Steyr Fahrzeugtechnik AG & Co. KG, 8041 Graz (AT)
(72) Erfinder: DIETZ, Wolfgang, A-8081 Pirching (AT); KRAMMER, Christoph, A-8530 Deutschlandsberg (AT)
(74) Vertreter: Zangger, Bernd
(86) Internationale Anmeldenummer: PCT/EP2011/069556
(87) Internationale Veröffentlichungsnummer: WO 2012/062706

(56) Entgegenhaltungen:
- EP-A1- 1 815 969
- WO-A1-2009/045095
- US-A- 4 284 457

## Beschreibung

### TECHNISCHES GEBIET

Die Erfindung betrifft eine Motorhaube eines Fahrzeugs umfassend einen Wabenkern mit einer Gitterstruktur, welche eine harzgetränkte Matrix umfasst. Desweiteren betrifft die Erfindung ein Verfahren zur Herstellung einer solchen Motorhaube.

### STAND DER TECHNIK

Wabenkerne und Verbundplatten sind prinzipiell bekannt. Traditionell werden solche Wabenkerne und Verbundplatten im Möbelbau eingesetzt, nach und nach hat diese Technik auch in anderen Bereichen Einzug gehalten, beispielsweise im Fahrzeugbau, Schiffs- und Flugzeugbau, beziehungsweise generell dort, wo eine hohe Bauteilsteifigkeit bei geringem Gewicht verlangt ist. Allgemein kann der Wabenkern aus beliebigem Material gefertigt sein. Recht häufig besteht er aus einem Verbundwerkstoff, bei dem ein Harz in eine Matrix eingelagert ist.

Beispielsweise offenbart die DE 10 2008 062 678 A1 dazu ein Verbundbauteil mit einer Wabenstruktur, welche aus wenigstens zwei miteinander verbundenen Lagen zusammengesetzt ist, wobei die wenigstens zwei Lagen der Wabenstruktur aus unterschiedlichen Werkstoffen gebildet sind.

Weiterhin offenbart die DE 10 2005 033 949 A1 eine Motorhaube aus einer Verbundplatte mit innenliegenden Kernteilen aus Hartschaum oder Waben. Zum Schutz von Fußgängern bilden die Kernteile Zonen verschiedener Härte und/oder Dicke. Zudem ist quer über die ganze Breite der Motorhaube eine Sollknickzone vorgesehen, durch die eine Schwächung der Struktur erzielt wird. Die Sollknickzone ist die Grenze zwischen einer vorderen Zone mit weicheren Kernteilen und einer hinteren Zone mit Kernteilen höherer Festigkeit.

Die DE 101 36 898 A1 offenbart zudem eine Motorhaube eines Kraftfahrzeugs, welche Verformungselemente aus mehreren Teilstücken umfasst, die über Versagensstellen miteinander verbunden sind. Bei einer dynamischen Belastung, wie sie bei einem Kopfaufprall auftritt, brechen die Versagensstellen, so dass die einzelnen Teilstücke kraftfrei gegeneinander verschoben werden.

Schließlich offenbart die DE 102 42 185 B3 eine Kunststoffplatte aus einem Sandwichmaterial, welche an verschiedenen Stellen mit nichthaftenden Einlegern hinterlegt wird. Dadurch wird die Haftung zwischen Wabenkern oder Schaumschicht und mindestens einer der Deckschichten oder Verstärkungsschichten unterbunden, was eine Schwachstelle und somit eine Sollknickstelle im Crashfall zur Folge hat.

Aus der US 4 284 457 A ist ein Verfahren bekannt zum Verbinden eines Hautelements wie Metall, Kunststoff, perforierter akustischer Haut oder Glasfaser- oder Graphit-verstärktem Kunststoff mit einer Wabenkern-Trägerstruktur, mit einem klebstoffbeschichteten Gewebematerial, das teilweise auf die Wabe gehärtet und abgekühlt wird, woraufhin das meiste Klebematerial entfernt wird, wenn das beschichtete Gewebe abgezogen wird.

Die EP 1 815 969 A1 offenbart ein Verfahren zur Herstellung eines Bauteils, insbesondere eines Flugzeugbauteils, wobei eine Laminatseite mit einem Kupplungsharz bestrichen wird und auf die bestrichene Laminatseite ein Wabenkern aufgesetzt wird und das Kupplungsharz an den Wabenwänden des Wabenkerns entlang steigt und einen Befestigungsmeniskus bildet.

Die WO 2009/045095 A1 lehrt ein Verfahren zur Herstellung einer Verbundplatte, umfassend einen Papierwabenkern und eine Platte, die an beiden Seiten des Wabenkerns in einem kontinuierlichen Verfahren befestigt ist, wobei das Verfahren die folgenden Schritte umfasst: Herstellen einer kontinuierlichen Papierwabe aus mindestens einem Papierband; Stapeln der Streifen aufeinander, während sie an verschiedenen Stellen entlang der Länge der Streifen befestigt werden, um die kontinuierliche Wabe in komprimierter Form zu bilden; Expandieren der komprimierten Endlospapierwabe und Imprägnieren mit einer härtbaren Zusammensetzung; Imprägnieren einer ersten und zweiten kontinuierlichen faserverstärkten Bahn mit der härtbaren Zusammensetzung oder einer weiteren härtbaren Zusammensetzung; Aufbringen der ersten und zweiten imprägnierten faserverstärkten Bahn auf jeweilige Seiten des imprägnierten Papierwabenkerns, um eine kontinuierliche Verbundplatte zu bilden.

Problematisch an den Wabenkernen beziehungsweise Verbundplatten bekannter Bauart ist deren vergleichsweise aufwändige Herstellung.

### OFFENBARUNG DER ERFINDUNG

Aufgabe der Erfindung ist es daher, eine verbesserte Motorhaube eines Fahrzeugs umfassend einen Wabenkern beziehungsweise ein verbessertes Verfahren zur Herstellung einer solchen Motorhaube anzugeben. Insbesondere soll eine Möglichkeit angegeben werden, die Steifigkeit eines solchen Wabenkerns beziehungsweise einer solchen Verbundplatte zu steuern.

Die Aufgabe der Erfindung wird mit einer Motorhaube eines Fahrzeugs gelöst, umfassend einen Wabenkern, mit einer Gitterstruktur, welche eine harzgetränkte Matrix umfasst, wobei die Matrix in inhomogener Weise mit dem Harz getränkt ist, wobei die Matrix nur bereichsweise unterschiedlich stark mit dem Harz getränkt ist und wobei die Inhomogenität zweidimensional über die Gitterstruktur, nämlich über die Fläche des Wabenkerns, verteilt ist, so dass in ersten Bereichen mehr Harz abgelagert ist, als in von den ersten Bereichen verschiedenen zweiten Bereichen, so dass unterschiedlich steife Zonen auf dem Wabenkern gebildet werden, nämlich eine Zone geringerer Steifigkeit dort, wo die Wahrscheinlichkeit besonders hoch ist, dass ein angefahrener Fußgänger mit dem Kopf aufschlägt, wenn er von dem Fahrzeug angefahren wird.

Weiterhin wird die Aufgabe der Erfindung gelöst durch ein Verfahren zur Herstellung einer Motorhaube eines Fahrzeugs umfassend einen Wabenkern, mit einer Gitterstruktur, welche eine harzgetränkte Matrix umfasst, wobei die Matrix bereichsweise unterschiedlich stark mit einem Harz oder mehreren Harzen in Kontakt gebracht wird, wobei die Inhomogenität zweidimensional über die Gitterstruktur, nämlich über die Fläche des Wabenkerns, verteilt ist, so dass in ersten Bereichen mehr Harz abgelagert ist, als in von den ersten Bereichen verschiedenen zweiten Bereichen, so dass unterschiedlich steife Zonen auf dem Wabenkern gebildet werden, nämlich eine Zone geringerer Steifigkeit dort, wo die Wahrscheinlichkeit besonders hoch ist, dass ein angefahrener Fußgänger mit dem Kopf aufschlägt, wenn er von dem Fahrzeug angefahren wird.

Erfindungsgemäß wird dadurch erreicht, dass sich die Steifigkeit eines Wabenkerns respektive einer Verbundplatte, welche einen solchen Wabenkern aufweist, sehr gut einstellen lässt. Insbesondere kann ein Wabenkern / eine Verbundplatte hergestellt werden, welche in verschiedenen Bereichen unterschiedliche Steifigkeiten aufweist.

Der Vorteil der Erfindung tritt erfindungsgemäß dann hervor, wenn ein Wabenkern oder eine Verbundplatte der genannten Art im Fahrzeugbau verwendet wird, nämlich als Motorhaube.

In diesem Fall ist es wichtig, dass sich Personen bei einem Aufprall auf das genannte Bauteil nicht oder nicht schwer verletzen. Mit Hilfe des erfindungsgemäßen Wabenkerns ist es nun möglich, eine Motorhaube eines Fahrzeugs auf einfache Weise unterschiedlich steif zu gestalten. So können verschiedene Zonen gebildet werden, an denen ein Fußgänger aller Wahrscheinlichkeit mit den Beinen, mit dem Rumpf oder mit dem Kopf auf die Motorhaube aufschlägt, wenn er von einem Fahrzeug angefahren wird.

Beispielsweise kann ein leicht herzustellender Wabenkern beziehungsweise dessen Gitterstruktur polygonförmige Waben umfassen, insbesondere hexagonale Waben. In einer weiteren leicht herzustellenden Variante eines Wabenkerns umfasst die Gitterstruktur gewellte Streifen, insbesondere gewellte Streifen mit dazwischen angeordneten geraden Streifen. In einer vorteilhaften Ausführungsform der Erfindung besteht der Wabenkern nur aus (solchen) Gitterelementen.

Die Gitterelemente bestehen aus einer Matrix mit einem darin eingebetteten und/oder darauf aufgebrachten Harz, somit aus einem Verbundwerkstoff. "Harz" gilt in diesem Zusammenhang als Sammelbegriff für feste bis flüssige organische Stoffe. Insbesondere kann die Matrix aus saugfähigem Material bestehen, beispielsweise aus Karton oder aus Fasergeweben, Fasergeflechten oder Fasergestricken aus Glasfasern, Kevlarfasern, Aramidfasern, Carbonfasern oder Gemischen derselben.

Weitere vorteilhafte Ausgestaltungen und Weiterbildungen der Erfindung ergeben sich nun aus den Unteransprüchen sowie aus der Beschreibung in Zusammenschau mit den Figuren.

Günstig ist es, wenn die Matrix aus einem im Wesentlichen homogenen Werkstoff besteht. Dadurch kann die Matrix auf einfache Weise hergestellt werden. Die Inhomogenität im Wabenkern wird dann vorwiegend durch die unterschiedliche Tränkung mit einem Harz bewerkstelligt. "Im Wesentlichen" bedeutet in diesem Zusammenhang, dass die Matrix zwar aus verschiedenen Werkstoffen hergestellt werden kann, beispielsweise aus Fasergemischen, die Eigenschaften der Matrix sich in den verschieden getränkten Bereichen aber nicht grundsätzlich voneinander unterscheiden beziehungsweise nicht von einer unterschiedlichen Tränkung abhängen.

Vorteilhaft ist es, wenn die Matrix nur bereichsweise mit dem Harz getränkt ist. Dadurch können unterschiedlich steife Bereiche des Wabenkerns besonders einfach hergestellt werden. Erfindungsgemäß ist die Matrix unterschiedlich stark mit dem Harz getränkt. Auf diese Weise kann eine Vielzahl an Steifigkeitsgraden der unterschiedlich getränkten Bereiche erzielt werden. Darüber hinaus kann die Steifigkeit des Wabenkerns kontinuierlich über den Wabenkern variiert werden.

Besonders vorteilhaft ist es, wenn die Matrix mit unterschiedlichen Harzen getränkt ist. Auf diese Weise kann ebenfalls eine Vielzahl an Steifigkeitsgraden der unterschiedlich getränkten Bereiche erzielt werden, beziehungsweise können auch anderer Eigenschaften als die Steifigkeit variiert werden. Beispielsweise kann ein mit einem ersten Harz getränkter Bereich wasserabweisend sein, wohingegen ein mit einem zweiten Harz getränkter Bereich nicht wasserabweisend ist.

Erfindungsgemäß ist die Inhomogenität zweidimensional über die Gitterstruktur verteilt. Auf diese Weise können unterschiedlich steife Zonen auf dem Wabenkern respektive auf der Verbundplatte gebildet werden. Erfindungsgemäß wird eine Motorhaube, welche einen solchen Wabenkern umfasst, dort besonders weich ausgeführt, wo die Wahrscheinlichkeit besonders hoch ist, dass ein angefahrener Fußgänger mit dem Kopf aufschlägt.

Besonders vorteilhaft ist es auch, wenn die Inhomogenität über dessen Höhe verteilt ist. Auf diese Weise kann beispielsweise ein progressives oder degressives Verhalten des Wabenkerns gegenüber einem in den Wabenkern oder in eine Verbundplatte mit einem solchen Wabenkern eindringenden Körper eingestellt werden. Beispielsweise kann der Wabenkern in Richtung des eindringenden Körpers gesehen immer stärker getränkt sein. Somit wird dem eindringenden Körper ein immer größer werdender Widerstand entgegengesetzt (progressives Verhalten). Desgleichen kann der Wabenkern in Richtung des eindringenden Körpers gesehen immer schwächer getränkt sein. Somit wird dem eindringenden Körper ein immer kleiner werdender Widerstand entgegengesetzt (degressives Verhalten).

Ein vorteilhaftes Verfahren zur Herstellung eines Wabenkerns ist gegeben, wenn die Matrix in das zumindest eine Harz getaucht wird. Dadurch lässt die Matrix auf einfache Weise mit Harz tränken. Durch teilweises Eintauchen kann der Wabenkern zudem bereichsweise mit Harz getränkt werden. Weiterhin kann die Bewegung beim Eintauchen in das Harz oder beim Herausziehen aus dem Harz dazu genützt werden, den Wabenkern bereichsweise unterschiedlich lange mit dem Harz in Kontakt zu bringen. In Bereichen, welche lange mit dem Harz in Kontakt sind, lagert sich das Harz vermehrt ab, in Bereichen, welche nur kurz mit dem Harz in Kontakt sind, dementsprechend weniger. Auf diese Weise können vergleichsweise komplexe Profile der Intensität, in welcher sich das Harz in der Matrix ablagert, realisiert werden. Die erwähnte Bewegung kann stetig oder unstetig sowie mit konstanter oder variierender Geschwindigkeit ausgeführt werden. Selbstverständlich kann der Tauchvorgang mit verschiedenen Harzen wiederholt werden, sodass verschiedene Bereiche hintereinander in unterschiedliche Harze getaucht werden. Die erwähnten Bereiche können sich dabei auch überlappen.

Ein vorteilhaftes Verfahren ist schließlich gegeben, wenn die Matrix mit dem zumindest einen Harz besprüht wird. Durch Variation der Dauer und/oder der Intensität, mit denen verschiedene Bereiche des Wabenkerns mit einem Harz besprüht werden, kann ebenfalls eine inhomogene Tränkung der Matrix erzielt werden. Insbesondere können verschiedene Bereiche hintereinander oder auch gleichzeitig mit unterschiedlichen Harzen besprüht werden.

In einer vorteilhaften Variante der Erfindung umfasst ein Wabenkern eine Gitterstruktur, die aus einer Vielzahl an Gitterelementen besteht, welche an Knotenstellen miteinander verbunden sind, bei dem zumindest ein Gitterelement ein benachbartes Gitterelement nur lose berührt oder bei dem ein Spalt zwischen denselben vorgesehen ist oder bei dem ein Gitterelement unterbrochen ist. Das heißt, dass manche der Gitterelemente untereinander nicht verbunden sind. Definitionsgemäß bilden im Rahmen der Erfindung mehrere "Gitterelemente" eine "Gitterstruktur" geometrischen Sinn, beziehungsweise den "Wabenkern" im körperlichen Sinn. Damit steht ein weiterer Parameter zur Beeinflussung der Steifigkeit eines Wabenkerns zur Verfügung. Der Wabenkern wird dabei vorwiegend gegenüber einer Belastung geschwächt, welche quer zu einer Unterbrechung oder einem Spalt wirkt, wohingegen die Steifigkeit des Wabenkerns gegenüber einer parallel zur Richtung der Unterbrechung oder des Spalt wirkenden Belastung kaum sinkt.

Besonders vorteilhaft ist es, wenn der Wabenkern einstückig ausgebildet ist. Auf diese Weise werden die Handhabung des Wabenkerns und auch die Herstellung einer Verbundplatte gegenüber Verfahren, bei denen mehrere Wabenkerne in einer Verbundplatte verbaut sind, wesentlich vereinfacht.

Vorteilhaft ist es, wenn der Wabenkern wenigstens eine Knotenstelle umfasst, an der alle Gitterelemente, welche diese Knotenstelle bilden, einander nur lose berühren oder ein Spalt zwischen denselben vorgesehen ist. Auf diese Weise wird der Wabenkern an der betreffenden Stelle besonders weich.

Vorteilhaft ist es weiterhin, wenn zumindest zwischen zwei benachbarten Knotenstellen parallel verlaufende Gitterelemente einander nur lose berühren oder ein Spalt zwischen denselben vorgesehen ist. Dadurch resultiert ein weiterer Parameter zur Steuerung der Steifigkeit eines Wabenkerns, bei dem Gitterelemente gewöhnlich flächig miteinander verklebt werden. Dies kann zum Beispiel dann der Fall sein. wenn der Wabenkern aus einzelnen Waben (beispielsweise hexagonale Waben) aufgebaut ist, welche miteinander verklebt werden. Werden einzelne Gitterelemente benachbarter Waben nicht miteinander verklebt, so entsteht eine planmäßige Schwachstelle innerhalbe der Gitterstruktur.

Vorteilhaft ist es, wenn zumindest eine lose Kontaktstelle beziehungsweise ein Spalt innerhalb der Gitterstruktur angeordnet ist. Dadurch kann der Wabenkern auf einfache Weise manipuliert werden, da am Rand keine losen Gitterelemente entstehen, welche sich verbiegen oder abreißen könnten.

Besonders vorteilhaft ist es, wenn mehrere lose Kontaktstellen beziehungsweise Spalte zweidimensional über die Gitterstruktur verteilt sind. Auf diese Weise können unterschiedlich steife Zonen auf dem Wabenkern respektive auf der Verbundplatte gebildet werden. Beispielsweise kann eine Motorhaube, welche einen solchen Wabenkern umfasst, dort besonders weich ausgeführt werden, wo die Wahrscheinlichkeit besonders hoch ist, dass ein angefahrener Fußgänger mit dem Kopf aufschlägt.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Figur 1: einen Wabenkern mit polygonförmigen Waben in Schrägansicht;
- Figur 2: eine Verbundplatte mit einem solchen Wabenkern im Schnitt;
- Figur 3: einen Wabenkern der hochkant in einen mit Harz gefüllten Behälter getaucht wird;
- Figur 4: einen bereichsweise mit Harz getränkten Wabenkern;
- Figur 5: einen Verbundplatte, bei der die Tränkung des Wabenkerns mit einem Harz über die Fläche verteilt inhomogen ist;
- Figur 6: einen Wabenkern der liegend in einen mit Harz gefüllten Behälter getaucht wird;
- Figur 7: einen Verbundplatte, bei der die Tränkung des Wabenkerns mit einem Harz über dessen Höhe verteilt inhomogen ist;
- Figur 8: einen Wabenkern, der mit Harz besprüht wird;
- Figur 9: einen Wabenkern mit gewellten Streifen;
- Figur 10: einen Wabenkern mit gewellten Streifen und dazwischen angeordneten geraden Streifen;
- Figur 11: einen Ausschnitt aus einem Wabenkern, bei dem ein Gitterelement die benachbarten Gitterelemente an einer Kontaktstelle nur lose berührt;
- Figur 12: wie Figur 11, nur mit einem Spalt;
- Figur 13: einen Ausschnitt aus einem Wabenkern, bei dem alle Gitterelemente eines Knotens einander nur lose berühren;
- Figur 14: wie Figur 13, nur mit einem Spalt;
- Figur 15: einen Ausschnitt aus einem Wabenkern mit einem unterbrochenen Gitterelement;
- Figur 16: einen Ausschnitt aus einem Wabenkern, bei dem zwischen zwei benachbarten Knotenstellen parallel verlaufende Gitterelemente einander nur lose berühren und
- Figur 17: einen Wabenkern mit über die Fläche verteilten Unterbrechungen.

### DETAILIERTE BESCHREIBUNG DER ERFINDUNG

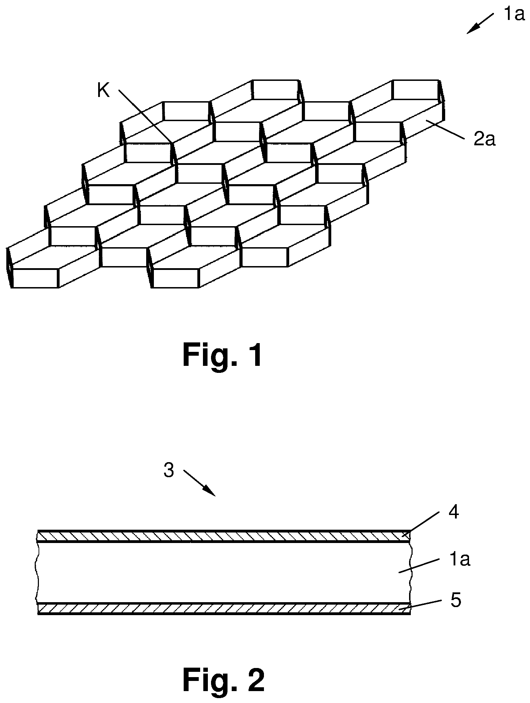

Fig. 1 zeigt einen Wabenkern 1a mit einer Gitterstruktur, die aus einer Vielzahl an Gitterelementen 2a besteht, welche an Knotenstellen K miteinander verbunden sind. In diesem Beispiel umfasst der Wabenkern 1a beziehungsweise dessen Gitterstruktur polygonförmige Waben, konkret hexagonale Waben.

Fig. 2 zeigt eine Verbundplatte 3, umfassend den Wabenkern 1a und damit verbundene Deckschichten 4 und 5.

Um die Steifigkeit des Wabenkerns 1a beziehungsweise der Verbundplatte 3 zu steuern, wird eine harzgetränkte Matrix, welche Bestandteil der Gitterstruktur ist in inhomogener Weise mit dem Harz getränkt. Wird der Wabenkern 1a respektive die Verbundplatte 3, welche den Wabenkern 1a umfasst, einer Belastung ausgesetzt, so führt diese erwähnte Inhomogenität dazu, dass sich der Wabenkern 1a / die Verbundplatte 3 unterschiedlich verformt.

Dazu kann die Matrixbereichsweise unterschiedlich starkmit einem Harz oder mehreren Harzen in Kontakt gebracht werden.

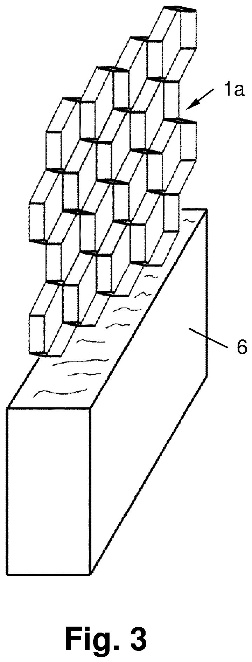

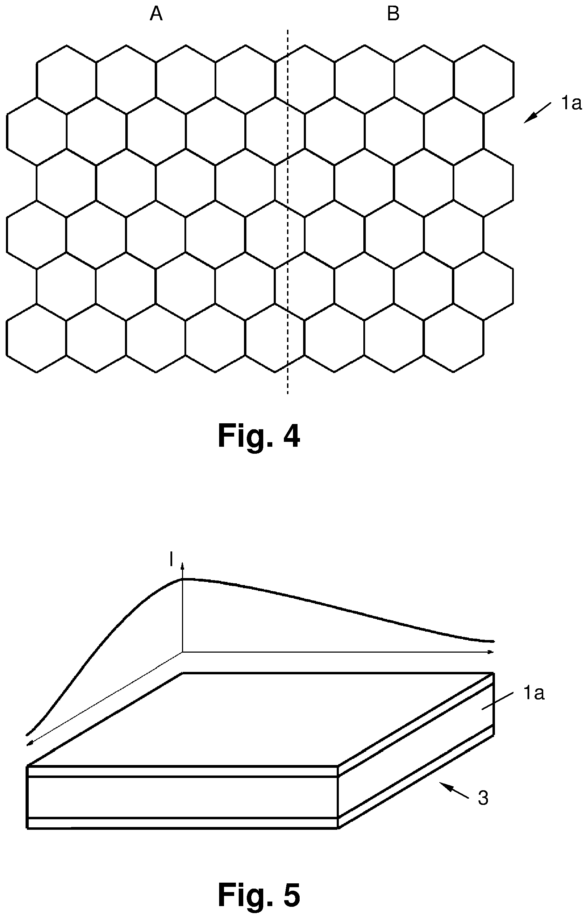

Beispielsweise kann die Matrix dazu wie in Fig. 3 dargestellt in einen mit Harz gefüllten Behälter 6 getaucht werden. Wird die Matrix nur teilweise eingetaucht, so wird die Matrix folglich nur bereichsweise mit Harz getränkt. Auf diese Weise kann ein Wabenkern hergestellt werden, welcher beispielsweise wie in Fig. 4 dargestellt in einem Bereich A mit Harz getränkt ist, in einem Bereich B dagegen nicht getränkt ist. Denkbar wäre auch, den Bereich B in einem weiteren Schritt mit einem anderen Harz zu tränken. Selbstverständlich können sich Bereiche, welche mit unterschiedlichen Harzen in Kontakt gebracht wurden, auch überschneiden.

Weiterhin kann eine Bewegung der Matrix während des Tauchvorgangs dazu genützt werden, um diese in inhomogener Weise zu tränken. Beispielsweise kann die Matrix vollständig in das Harz eingetaucht und mit unterschiedlichen Geschwindigkeiten sowie kontinuierlich oder diskontinuierlich wieder aus diesem herausgezogen werden. Selbstverständlich kann auch die Bewegung beim Eintauchen in den Behälter 6 variiert werden. Auf diese Weise wird die Matrix bereichsweise unterschiedlich lang mit dem Harz in Kontakt gebracht, sodass sich dieses unterschiedlich in der Matrix ablagert. Fig. 5 zeigt ein Beispiel, wie die Intensität I des Harzes über dem Wabenkern 1a respektive der Verbundplatte 3 verteilt sein kann. Wie aus der Fig. 5 leicht ersichtlich ist, ist die Inhomogenität zweidimensional über die Gitterstruktur verteilt. Selbstverständlich kann dieses Verfahren auch mit unterschiedlichen Harzen angewandt werden.

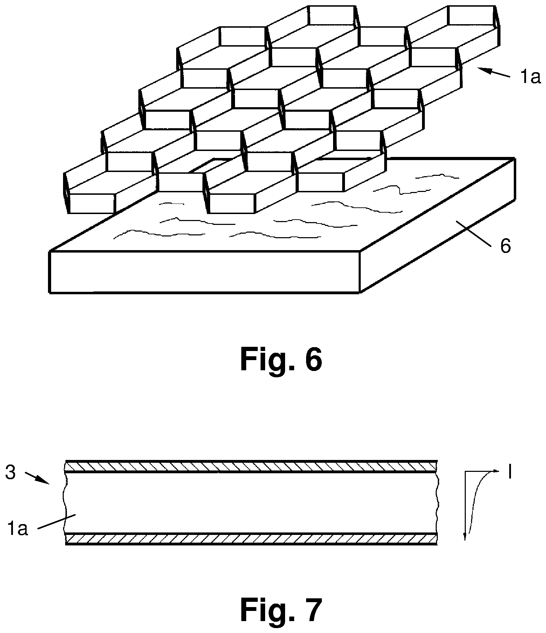

Fig. 6 zeigt ein weiteres Verfahren, bei dem die Matrix liegend in einen mit Harz gefüllten Behälter 6 getaucht wird. Analog zu dem zu den Figuren 4 und 5 beschriebenen Verfahren kann die Matrix nur teilweise eingetaucht werden, um die Matrix nur bereichsweise zu tränken. Desgleichen kann eine Bewegung der Matrix während des Tauchvorgangs variiert werden. Auf diese Weise wird die Matrix wiederum bereichsweise unterschiedlich lang mit dem Harz in Kontakt gebracht, sodass sich dieses unterschiedlich in der Matrix ablagert. Fig. 7 zeigt ein Beispiel, wie die Intensität I des Harzes über dem Wabenkern 1a respektive der Verbundplatte 3 verteilt sein kann. Wie aus der Fig. 7 leicht ersichtlich ist, ist die Inhomogenität über die Höhe des Wabenkerns 1a verteilt.

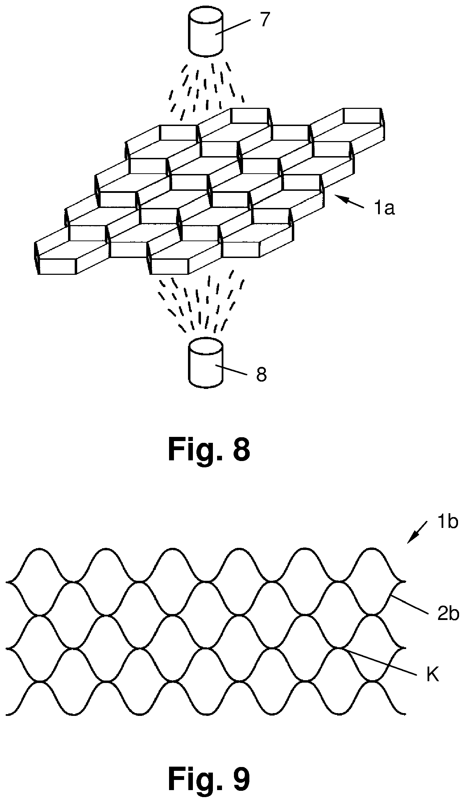

Fig. 8 zeigt ein weiteres Verfahren, bei dem die Matrix durch zwei Sprühköpfe 7 und 8 mit Harz besprüht werden. Auf diese Weise wird die Matrix bereichsweise unterschiedlich stark mit einem Harz in Kontakt gebracht. Zum Beispiel lagert sich das Harz in den Randbereichen der Matrix, welche den Sprühköpfen 7 und 8 zugewandt sind, stärker ab als in der Mitte. Denkbar ist natürlich auch, dass der Sprühkopf 7 ein anderes Harz aufträgt als der Sprühkopf 8. Durch horizontales Bewegen der Matrix, kann eine inhomogene Tränkung auch über die Fläche des Wabenkerns 1a gesteuert werden.

An dieser Stelle wird angemerkt dass die oben angeführten Varianten beliebig untereinander kombiniert werden können. Beispielsweise kann eine Matrix in ein Harz getaucht und mit einem anderen besprüht werden.

Die obigen Beispiele wurden anhand eines Wabenkerns 1a mit hexagonalen Waben erläutert. Deren Anwendung ist natürlich keinesfalls zwingend. Möglich ist natürlich auch, polygonförmige Waben mit einer anderen Anzahl an Ecken zu verwenden. Insbesondere ist es auch möglich, unterschiedliche Vielecke miteinander zu kombinieren, beispielsweise Achtecke mit Vierecken.

Fig. 9 zeigt eine weitere Variante eines Wabenkerns 1b, bei der die Gitterstruktur gewellte Streifen umfasst. Zar werden bei der Herstellung einer solchen Struktur üblicherweise einzelne gewellte Streifen miteinander verbunden, geometrisch kann aber auch diese Gitterstruktur so aufgefasst werden, dass sie aus einer Vielzahl an Gitterelementen 2b besteht, welche an Knotenstellen K miteinander verbunden sind.

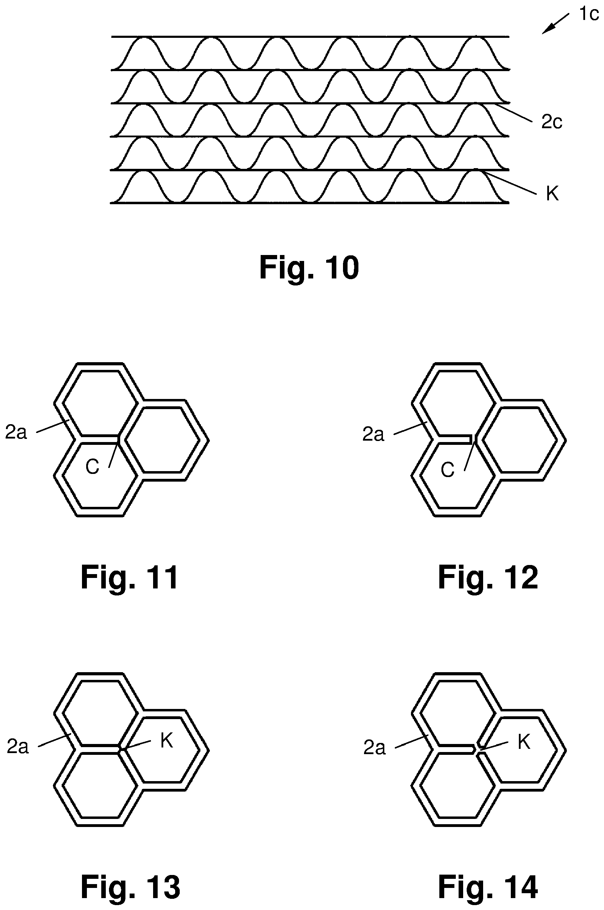

Fig. 10 zeigt einen Wabenkern 1c mit einer Gitterstruktur, welche gewellte Streifen mit dazwischen angeordneten geraden Streifen umfasst. Auch diese Gitterstruktur kann so aufgefasst werden, dass sie aus einer Vielzahl an Gitterelementen 2a besteht, welche an Knotenstellen K miteinander verbunden sind.

Prinzipiell können die Deckschichten 4 und 5 bei der Herstellung einer Verbundplatte 3 ebenfalls in inhomogener Weise auf einen Wabenkern 1a..1c aufgebracht werden, beispielsweise durch unterschiedliche Verteilung eines dafür vorgesehenen Klebstoffs. Durch die inhomogene Tränkung des Wabenkerns 1a..1c kann dies aber in den meisten Fällen entfallen, sodass die Herstellung einer Verbundplatte 3 vereinfacht wird. Vorzugsweise besteht die Matrix aus einem im Wesentlichen homogenen Werkstoff, wodurch auch diese auf einfache Weise hergestellt werden kann.

Um die Steifigkeit eines Wabenkerns 1a..1c beziehungsweise einer Verbundplatte 3 zu steuern, kann zusätzlich oder alternativ zur inhomogenen Tränkung der Gitterstruktur mit einem Harz auch vorgesehen sein, dass zumindest ein Gitterelement ein benachbartes Gitterelement nur lose berührt oder dass ein Spalt zwischen denselben vorgesehen ist oder dass ein Gitterelement unterbrochen ist. Das heißt, dass die genannten Gitterelemente untereinander nicht verbunden sind. Wird der Wabenkern 1a respektive die Verbundplatte 3, welche den Wabenkern 1a umfasst, einer Belastung in einer Richtung ausgesetzt, welche in der Zeichenebene der Figur 4 liegt, so führen diese nicht verbundenen Gitterelemente dazu, dass der Wabenkern 1a / die Verbundplatte 3 an dieser Stelle besonders weich ist. Die Steifigkeit des der Wabenkerns 1a / die Verbundplatte 3 kann auf diese Weise gut gesteuert werden. Wird der Wabenkern 1a / die Verbundplatte 3 normal zur genannten Zeichenebene belastet, so unterscheidet sich die Steifigkeit derselben nicht oder nur geringfügig von der Steifigkeit eines Wabenkerns / einer Verbundplatte unterscheidet, welche keine solche Unterbrechungen aufweist.

Fig. 11 zeigt dazu einen Ausschnitt aus einem Wabenkern mit hexagonalen Waben, bei dem ein Gitterelement 2a die benachbarten Gitterelemente 2a an der Kontaktstelle C nur lose berührt. In Fig. 12 ist darüber hinaus ein Spalt an der Stelle C ausgebildet.

Fig. 13 zeigt einen Ausschnitt aus einem weiteren Wabenkern, welcher eine Knotenstelle K aufweist, an der alle Gitterelemente 2a, welche diese Knotenstelle K bilden, einander nur lose berühren. In Fig. 14 ist darüber hinaus ein Spalt zwischen denselben vorgesehen.

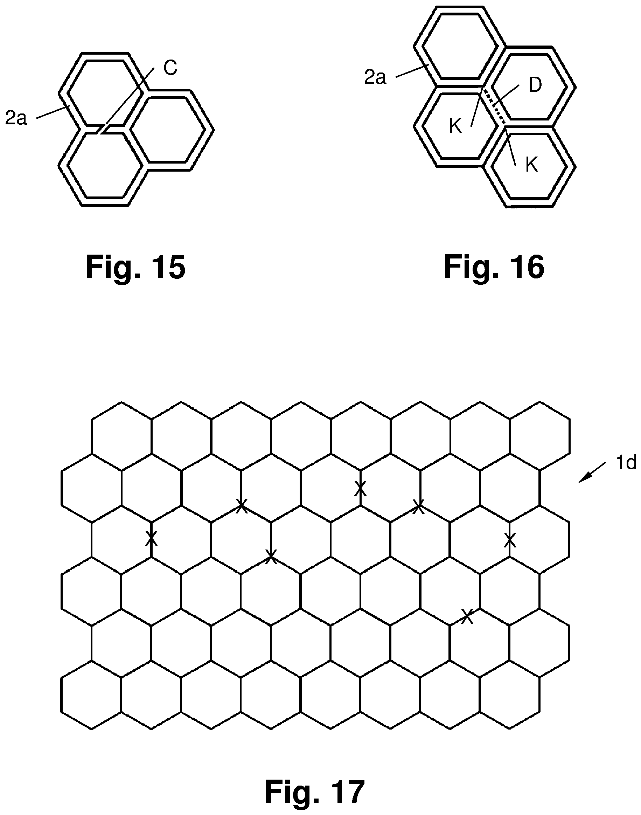

Fig. 15. zeigt einen Ausschnitt aus einem Wabenkern, bei dem ein Gitterelement 2a an der Stelle C unterbrochen ist. Zusätzlich sind die Enden des betreffenden Gitterelements 2a abgeschrägt, sodass sie bei Druckbelastung leichter aneinander vorbei gleiten können. Dies ist aber nicht zwingend der Fall, die Enden können auch gerade ausgebildet sein. Umgekehrt können auch die in den Figuren 11 bis 14 dargestellten Unterbrechungen abgeschrägt sein.

Fig. 16. zeigt einen Ausschnitt aus einem Wabenkern, bei dem zwischen zwei benachbarten Knotenstellen parallel verlaufende Gitterelemente 2a einander nur lose berühren. Dies ist bei der Kontaktstelle D (mit punktierter Linie dargestellt) der Fall. Alternativ kann auch ein Spalt an der Stelle D vorgesehen sein.

Fig. 17 zeigt ein Beispiel, wie die mit einem "X" markierten Unterbrechungen zweidimensional über die Gitterstruktur eines Wabenkerns 1d verteilt sein können. In der Fig. 17. sind die Unterbrechungen X unregelmäßig verteilt, selbstverständlich können diese aber auch je nach Anwendungsfall regelmäßig verteilt sein. In der Fig. 17 sind die Unterbrechungen X desweiteren innerhalb der Gitterstruktur angeordnet, sodass am Rand der Gitterstruktur keine losen Gitterelemente 2a entstehen. Aus der Fig. 17 ist auch ersichtlich, dass der Wabenkern 1d einstückig ausgebildet ist. Auf diese Weise ist dessen Manipulation, beziehungsweise auch die Herstellung der Verbundplatte 3 besonders einfach.

Die obigen Beispiele wurden anhand eines Wabenkerns 1a mit hexagonalen Waben erläutert. Deren Anwendung ist natürlich keinesfalls zwingend. Möglich ist natürlich auch, polygonförmige Waben mit einer anderen Anzahl an Ecken zu verwenden. Schließlich können auch Gitterstrukturen mit gewellten Streifen (Fig. 9) oder mit gewellte Streifen mit dazwischen angeordneten geraden Streifen (Fig. 10) solche Unterbrechungen aufweisen. Beispielsweise kann eine solche dadurch hergestellt werden, dass an den betreffenden Knotenstellen K beim Verkleben der Streifen kein Kleber aufgetragen wird. In diesem Fall sind jeweils zwei Gitterelemente 2b, 2c der vier an diese Knotenstelle K grenzenden Gitterelemente 2b, 2c untereinander verbunden.

Die in den Figuren gezeigten Maßnahmen können auf beliebige Art und Weise kombiniert werden. Beispielsweise kann der Wabenkern 1d aus der Fig. 17 so mit Harz getränkt werden wie der Wabenkern 1a aus der Fig. 4. Oder ein Wabenkern wie in Fig. 14 dargestellt wird wie in Fig. 8 dargestellt mit Harz besprüht. Der Fachmann kann die offenbarte Lehre ohne Mühe auf weitere Beispiele anwenden.

Ein Wabenkern 1a..1d oder eine Verbundplatte 3 kann erfindungsgemäß im Fahrzeugbau verwendet werden, nämlich als Motorhaube. In diesem Fall ist es wichtig, dass sich Personen bei einem Aufprall auf das genannte Bauteil nicht oder nicht schwer verletzen. Die Maßnahmen zur Steuerung der Festigkeit eines Wabenkerns 1a..1d bietet nun die Möglichkeit, eine Motorhaube eines Fahrzeugs auf einfache Weise unterschiedlich steif zu gestalten. So können verschiedene Zonen gebildet werden, an denen ein Fußgänger aller Wahrscheinlichkeit mit den Beinen, mit dem Rumpf oder mit dem Kopf auf die Motorhaube aufschlägt, wenn er von einem Fahrzeug angefahren wird.

Abschließend wird festgehalten, dass die Bestandteile der Figuren ggf. nicht maßstabsgetreu dargestellt sind und dass die einzelnen in den Figuren dargestellten Varianten auch den Gegenstand einer unabhängigen Erfindung bilden können. Lageangaben wie "rechts", "links", "oben", "unten" und dergleichen beziehen sich auf die dargestellte Lage des jeweiligen Bauteils und sind bei Änderung der genannten Lage gedanklich entsprechend anzupassen.

## Patentansprüche

1. Motorhaube eines Fahrzeugs umfassend einen Wabenkern (1a..1d) mit einer Gitterstruktur, welche eine harzgetränkte Matrix umfasst, **dadurch gekennzeichnet, dass** die Matrix in inhomogener Weise mit dem Harz getränkt ist, wobei die Matrix nur bereichsweise unterschiedlich stark mit dem Harz getränkt ist und wobei die Inhomogenität zweidimensional über die Gitterstruktur, nämlich über die Fläche des Wabenkerns (1a..1d), verteilt ist, so dass in ersten Bereichen mehr Harz abgelagert ist, als in von den ersten Bereichen verschiedenen zweiten Bereichen, so dass unterschiedlich steife Zonen auf dem Wabenkern gebildet werden, nämlich eine Zone geringerer Steifigkeit dort, wo die Wahrscheinlichkeit besonders hoch ist, dass ein angefahrener Fußgänger mit dem Kopf aufschlägt, wenn er von dem Fahrzeug angefahren wird.

2. Motorhaube nach Anspruch 1, **dadurch gekennzeichnet, dass** die Matrix aus einem im Wesentlichen homogenen Werkstoff besteht.

3. Motorhaube nach Anspruch 1 oder 2, **dadurch gekennzeichnet, dass** die Matrix nur bereichsweise mit dem Harz getränkt ist.

4. Motorhaube nach einem der Ansprüche 1 bis 3, **dadurch gekennzeichnet, dass** die Matrix mit unterschiedlichen Harzen getränkt ist.

5. Motorhaube nach einem der Ansprüche 1 bis 4, **dadurch gekennzeichnet, dass** die Inhomogenität über dessen Höhe verteilt ist.

6. Motorhaube nach einem der Ansprüche 1 bis 5, **dadurch gekennzeichnet, dass** die Gitterstruktur polygonförmige Waben umfasst.

7. Motorhaube nach einem der Ansprüche 1 bis 6, **dadurch gekennzeichnet, dass** die Gitterstruktur gewellte Streifen umfasst.

8. Motorhaube nach Anspruch 7, **dadurch gekennzeichnet, dass** die Gitterstruktur gewellte Streifen mit dazwischen angeordneten geraden Streifen umfasst.

9. Motorhaube nach einem der Ansprüche 1 bis 8, umfassend eine Verbundplatte (3), umfassend den Wabenkern (1a..1d) und damit verbundene Deckschichten (4, 5).

10. Verfahren zur Herstellung einer Motorhaube eines Fahrzeugs umfassend einen Wabenkern (1a..1d), mit einer Gitterstruktur, welche eine harzgetränkte Matrix umfasst, **dadurch gekennzeichnet, dass** die Matrix:
bereichsweise unterschiedlich stark mit einem Harz oder mehreren Harzen in Kontakt gebracht wird, wobei die Inhomogenität zweidimensional über die Gitterstruktur, nämlich über die Fläche des Wabenkerns (1a..1d), verteilt ist, so dass in ersten Bereichen mehr Harz abgelagert ist, als in von den ersten Bereichen verschiedenen zweiten Bereichen, so dass unterschiedlich steife Zonen auf dem Wabenkern gebildet werden, nämlich eine Zone geringerer Steifigkeit dort, wo die Wahrscheinlichkeit besonders hoch ist, dass ein angefahrener Fußgänger mit dem Kopf aufschlägt, wenn er von dem Fahrzeug angefahren wird.

11. Verfahren nach Anspruch 10, **dadurch gekennzeichnet, dass** die Matrix in das zumindest eine Harz getaucht wird.

12. Verfahren nach Anspruch 10 oder 11, **dadurch gekennzeichnet, dass** die Matrix mit dem zumindest einen Harz besprüht wird.

## Claims

1. Engine hood of a vehicle comprising a honeycomb core (1a..1d) having a lattice structure, which comprises a resin-impregnated matrix, **characterized in that** the matrix is impregnated inhomogeneously with the resin, wherein the matrix is only regionally impregnated with the resin at different strengths and wherein the inhomogeneity is distributed two-dimensionally over the lattice structure, specifically over the surface of the honeycomb core (1a..1d), such that more resin is deposited in first regions than in second regions which differ from the first regions, such that zones of different stiffness are formed on the honeycomb core, specifically a zone of relatively low stiffness where the probability is particularly high that a pedestrian who the vehicle runs into will strike with his head when he is run into by the vehicle.

2. Engine hood according to Claim 1, **characterized in that** the matrix consists of a substantially homogeneous material.

3. Engine hood according to Claim 1 or 2, **characterized in that** the matrix is only regionally impregnated with the resin.

4. Engine hood according to any one of Claims 1 to 3, **characterized in that** the matrix is impregnated with different resins.

5. Engine hood according to any one of Claims 1 to 4, **characterized in that** the inhomogeneity is distributed over its height.

6. Engine hood according to any one of Claims 1 to 5, **characterized in that** the lattice structure comprises polygonal honeycombs.

7. Engine hood according to any one of Claims 1 to 6, **characterized in that** the lattice structure comprises corrugated strips.

8. Engine hood according to Claim 7, **characterized in that** the lattice structure comprises corrugated strips with linear strips arranged between them.

9. Engine hood according to any one of Claims 1 to 8, comprising a sandwich panel (3), comprising the honeycomb core (1a..1d) and cover layers (4, 5) connected thereto.

10. Method for producing an engine hood of a vehicle comprising a honeycomb core (1a..1d) having a lattice structure, which comprises a resin-impregnated matrix, **characterized in that** the matrix:
is brought into contact with a resin or a plurality of resins regionally at different strengths, wherein the inhomogeneity is distributed two-dimensionally over the lattice structure, specifically over the surface of the honeycomb core (1a..1d), such that more resin is deposited in first regions than in second regions which differ from the first regions, such that zones of different stiffness are formed on the honeycomb core, specifically a zone of relatively low stiffness where the probability is particularly high that a pedestrian who the vehicle runs into will strike with his head when he is run into by the vehicle.

11. Method according to Claim 10, **characterized in that** the matrix is immersed in the at least one resin.

12. Method according to Claim 10 or 11, **characterized in that** the matrix is sprayed with the at least one resin.

## Revendications

1. Capot d'un véhicule comprenant une âme alvéolaire (1a .. 1d) avec une structure de grille, qui comprend une matrice imprégnée de résine, **caractérisé en ce que** la matrice est imprégnée de résine de manière hétérogène, dans lequel la matrice n'est que localement imprégnée de résine de façon différemment forte et dans lequel l'hétérogénéité est répartie selon deux dimensions sur la structure de grille, à savoir sur la face de l'âme alvéolaire (1a .. 1d), de telle manière qu'une plus grande quantité de résine soit déposée dans des premières régions que dans des deuxièmes régions différentes des premières régions, de telle manière que des zones de rigidité différente soient formées sur l'âme alvéolaire, à savoir une zone de moindre rigidité là où la probabilité est particulièrement élevée qu'un piéton renversé heurte de la tête, lorsqu'il est renversé par le véhicule.

2. Capot selon la revendication 1, **caractérisé en ce que** la matrice se compose d'un matériau essentiellement homogène.

3. Capot selon la revendication 1 ou 2, **caractérisé en ce que** la matrice n'est que localement imprégnée de résine.

4. Capot selon l'une quelconque des revendications 1 à 3, **caractérisé en ce que** la matrice est imprégnée avec des résines différentes.

5. Capot selon l'une quelconque des revendications 1 à 4, **caractérisé en ce que** l'hétérogénéité est répartie sur sa hauteur.

6. Capot selon l'une quelconque des revendications 1 à 5, **caractérisé en ce que** la structure de grille comprend des alvéoles polygonales.

7. Capot selon l'une quelconque des revendications 1 à 6, **caractérisé en ce que** la structure de grille comprend des bandes ondulées.

8. Capot selon la revendication 7, **caractérisé en ce que** la structure de grille comprend des bandes ondulées avec des bandes droites disposées entre celles-ci.

9. Capot selon l'une quelconque des revendications 1 à 8, comprenant un panneau composite (3), comprenant l'âme alvéolaire (1a .. 1d) et des couches de recouvrement (4, 5) assemblées à celle-ci.

10. Procédé de fabrication d'un capot d'un véhicule comprenant une âme alvéolaire (1a .. 1d) avec une structure de grille, qui comprend une matrice imprégnée de résine, **caractérisé en ce que** la matrice est mise en contact localement de façon différemment forte avec une résine ou plusieurs résines, dans lequel l'hétérogénéité est répartie selon deux dimensions sur la structure de grille, à savoir sur la face de l'âme alvéolaire (1a .. 1d), de telle manière qu'une plus grande quantité de résine soit déposée dans des premières régions que dans des deuxièmes régions différentes des premières régions, de telle manière que des zones de rigidité différente soient formées sur l'âme alvéolaire, à savoir une zone de moindre rigidité là où la probabilité est particulièrement élevée qu'un piéton renversé heurte de la tête, lorsqu'il est renversé par le véhicule.

11. Procédé selon la revendication 10, **caractérisé en ce que** la matrice est plongée dans ladite au moins une résine.

12. Procédé selon la revendication 10 ou 11, **caractérisé en ce que** la matrice est arrosée avec ladite au moins une résine.
